# EUROPEAN PATENT SPECIFICATION

(11) **EP 4 067 129 B1**
(45) Date of publication and mention of the grant of the patent: **22.01.2025**
(21) Application number: 21166482.6
(22) Date of filing: 31.03.2021
(51) Int. Cl.: B60H 1/00, G01D 11/24, G01K 1/12

(54) **AN AIR CONDITIONING SYSTEM**
KLIMATISIERUNGSSYSTEM
SYSTÈME DE CLIMATISATION D'AIR

(43) Date of publication of application: 05.10.2022
(73) Proprietor: Valeo Klimasysteme GmbH, 96476 Bad Rodach (DE)
(72) Inventor: GESELL, Bodo, 96476 Bad Rodach (DE); LILGE, Hans-Joachim, 96476 Bad Rodach (DE); REINHARDT, Mattias, 96476 Bad Rodach (DE)
(74) Representative: Valeo Systèmes Thermiques

(56) References cited:
- CN-A- 111 024 267
- DE-B3- 102012 219 962
- JP-A- H09 193 650
- JP-U- S4 928 561
- KR-A- 20040 103 595
- KR-A- 20150 021 198

## Description

### FIELD OF THE INVENTION

The invention relates to an air conditioning system. In particular, the invention relates to the air conditioning system for a motor vehicle.

### BACKGROUND OF THE INVENTION

Heating, ventilating and/or air conditioning systems (HVAC) are regulating individually the air flow and air temperature to passenger compartment areas, especially to foot, body and windscreen air outlets and/or individually to the driver seat or front passenger seat and/or rear passenger seats. The HVAC consists of a blower and a housing comprising an evaporator, a heating element and several air nozzles with flaps for throttling or closing the air flow.

For high efficiency and control of the AC system, the evaporator airflow temperature is controlled by an evaporator temperature sensor, which also prevents the evaporator from being frozen.

The sensor position is close to the evaporator. The measured temperature indicates the temperature of air just having passed the evaporator. Other thermal impacts influencing that measured value have to be avoided, specifically the influence of adjacent heating elements such as a standard heater core, a PTC, an inner condenser and the like.

Current sensor architectures and positions may not be able to avoid sufficiently the influence of heat radiation causing, especially at low air flow rates, malfunction of the AC-system or a frozen evaporator.

Commonly known heating elements exchange heat from a coolant medium to an airflow passing by thereafter to be blown into the passenger cabin. Optional second heat exchangers, for example PTC heaters, are used to shorten the time period before an air conditioning system, with a coolant - based heat exchanger only, may provide warmth.

Modern heating, ventilating and air conditioning systems for electrically driven vehicles may include for example high - voltage positive thermal coefficient heaters (HV - PTCs) and heat exchangers using refrigerants (R134a, R1234yf, R744, etc.) instead of coolant for heat pump systems.

Those heaters are being operated on a higher temperature level compared to conventional coolant - based heater cores, thereby influencing adjacent components including the evaporator sensor.

Some prior art sensors relate to a temperature sensor of an air conditioning system for detecting the temperature of the evaporator surface. The device is fixed with a clamp mechanism and attached to evaporator tubes. The sensing tip dives into the evaporator fins. Disadvantageously this clamping method bears the risk of damaging the evaporator during installation. In addition, the evaporator surface temperature is measured, but not the temperature of the airflow having passed the evaporator.

Other prior art sensors, as disclosed in JP H09 193650 A, relate to a method to position the sensor on the surface of the evaporator and alternatively close to the evaporator to sense the airflow temperature. An inserted temperature sensor senses the surface temperature of the evaporator when inserted between the fins of the evaporator and attached to the surfaces of the fins. If the sensor is fixed separated from the evaporator it will sense the temperature of the airflow having passed through the evaporator. The air conditioning housing has a mounting hole through which a sensor coupling part is coupled inside the vehicle air conditioning apparatus, thereby allowing selectively mounting of an inserted or integrated temperature sensor device. Disadvantageously the insertion method has the risk of damaging the evaporator during installation in case of placing the senor between the fins of the evaporator.

In case of installing the sensor capable of measuring the temperature of air having passed the evaporator, the resulting temperature may be influenced by heat radiation of adjacent heat sources like PTCs, inner condenser, heater core and the like.

The present invention aims to resolve the described problem.

### SUMMARY OF THE INVENTION

The object of the invention is an air conditioning system for a motor vehicle according to claim 1 and its dependent claims but also relates to a motor vehicle according to claim 7.

### BRIEF DESCRIPTION OF DRAWINGS

Examples of the invention will be apparent from and described in detail with reference to the accompanying drawings, in which:
Fig. 1 shows a schematic view of the air conditioning system.
Fig. 2 shows another schematic view of the air conditioning system wherein the sensor comprises a heat shield.
Fig. 3 shows the standalone sensor of either of Figs 1 or 2 comprising additional coating.

### DETAILED DESCRIPTION OF EMBODIMENTS

Heating, ventilating and/or air conditioning systems (HVACs) are regulating individually the airflow and air temperature to passenger compartment areas. An HVAC consists of a blower and a housing comprising an evaporator including a sensor either measuring its surface temperature or measuring the temperature of a passed airflow, at least one heating element, a variety of flaps regulating internally the airflow volume and / or airflow direction and several air outlet nozzles with flaps to throttle or to close the airflow into the passenger cabin.

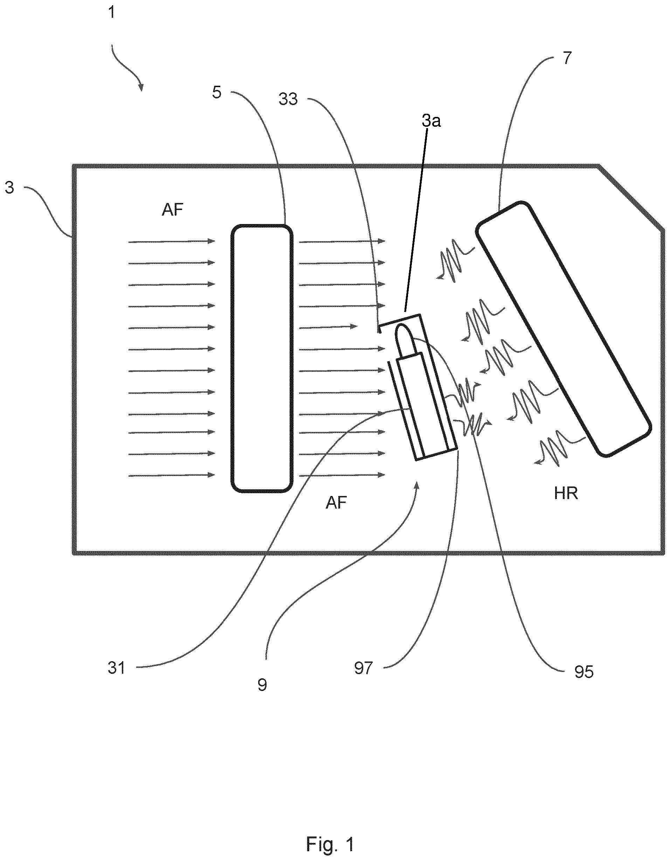

Fig. 1 shows an air conditioning system 1 (further referred to as "system") for a motor vehicle comprising a housing 3 for the first fluid AF. The direction of flow of the first fluid AF is presented in the figures by respective arrows. The housing 3 comprises a first fluid inlet, and at least one first fluid outlet. The inlet at the outlet are not shown in figures for the sake of clarity. The housing 3 may be made of any material (e.g. synthetic material such as plastic, etc.) or by any technique (e.g. plastic welding) which would provide a fluid- tight connection of the housing 3 between the inlet and the outlet.

The housing 3 comprises at least one port 3a in its structure. The port 3a may be in the form of an opening. The port 3a may also comprise fixing means, collar and other additional features, depending on the type of the device received therein.

The system 1 comprises a first heat exchanger 5. The first heat exchanger 5 may be configured to cool down the first fluid AF flowing through the housing 3. For example, the first heat exchanger may be an evaporator. Generally, the heat exchanger 5 is configured to heat exchange with the first fluid AF.

The system 1 further comprises at least one second heat exchanger 7 configured to generate a heat radiation HR. In other words, the second heat exchanger may increase the temperature of the first fluid AF by means of heat radiation HR. The possible heat radiation directions are presented in figures by respective arrows. The second heat exchanger 7 is located downstream to the first heat exchanger 5.

The second heat exchanger 7 may be, for example, a heater core. The second heat exchanger 7 may be aligned parallel to the first heat exchanger 5. Alternatively, the second heat exchanger 7 may be inclined with respect to the first heat exchanger 5, as shown in Fig.1 . The inclination between the heat exchangers 5, 7 allows to decrease a packaging, i.e. it allows to reduce the overall size of the system 1.

As further shown in Fig. 1, the system comprises at least one temperature sensor 9 configured to be fixed to the port 3a so that at least a portion of the sensor 9 is located between the first heat exchanger 5 and the second heat exchanger 7. The "sensor" may be defined as a device which detects or measures a physical property and records, indicates, or otherwise responds to it Therefore the sensor 9 further comprises at least one sensitive portion 95 being at least partially isolated form the heat radiation HR generated by the heating element 7. Further, the sensor comprises a casing 97.

The sensor 9 is strictly related to the operational mode of the first heat exchanger, especially when the first heat exchanger is the evaporator.

A key function of the sensor 9 is to prevent the first heat exchanger 5 from being frozen.

In such cases the airflow into the passenger cabin would be reduced or in the worst case blocked.

The sensor 9 detects the temperature downstream of the first heat exchanger 5 and before the first fluid AF flows to the second heat exchanger 7. The sensor 9 allows also to control the AC system and enhance its efficiency.

The sensor 9 is capable of avoiding the impact of thermal radiation HR of adjacent heat sources such as the second heat exchanger 7 and thereby sensing reliably the temperature of the first fluid AF airflow having passed the first heat exchanger 5.

The sensor 9 may comprise an opening 33 configured to provide a contact between the first fluid AF and the sensitive portion 95. The opening 33 may be formed in the casing 97.

The sensor 9 further comprises a protrusion 31 integrally formed therewith configured to shift the sensitive portion 95 towards an intended measurement point with respect to the housing 3. It is preferred to measure the parameters of the first fluid AF as close as possible to exchanger 5 ("coldest point"), but with certain distance to avoid problems like water drops on the sensitive parts. That area the measurement is of most reliance.

The casing 97 integrally formed with the protrusion 31 is configured to at least partially insulate the protrusion 31 with the sensor 9 from the heat radiation HR.

Therefore, the sensitive portion 95 is thermally connected with first fluid AF and may be thermally insulated from the heat radiation HR. Terms such as thermally connected/ insulated refer to the ability of first fluid AF or the heat radiation HR to cool down or heat the sensor 9.

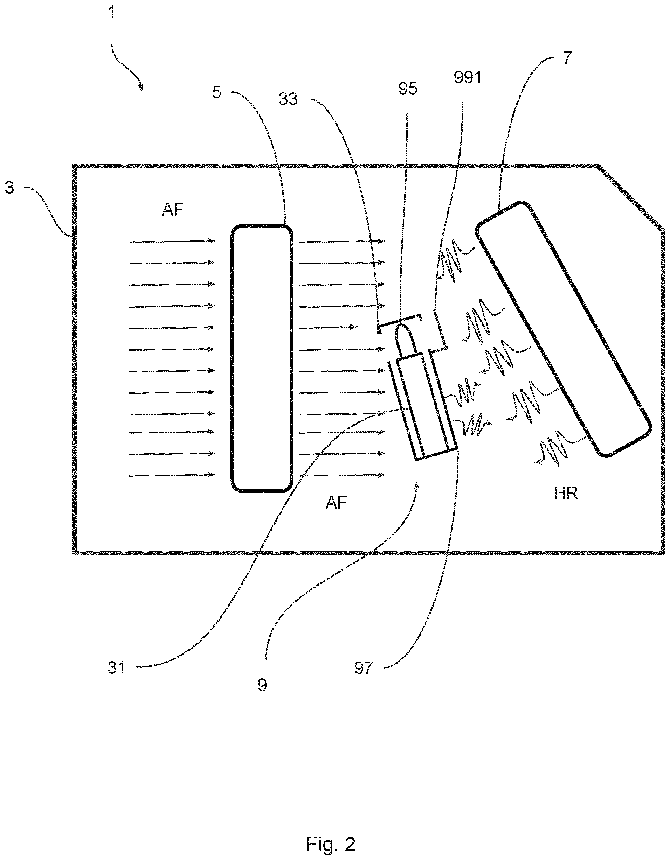

Fig. 2 shows system 1 in which the sensor 9 comprises a heat shield 991 which may be fixed directly to the sensitive portion 95 or to the casing 97. The heat shield 991 may be in a form of protrusion distanced from the casing 97 and close to the sensitive portion 95 ,e.g. in parallel configuration. The heat shield 991 may be configured to limit and/ or reflect at least a portion of the heat radiation HR by forming additional gap. The gap allows to deflect the portion of heat radiation HR earlier and to capture or deflect the residual heat radiation by the portion of the casing 97 located in the vicinity of said gap. Other forms of heat shield 991 are also envisaged.

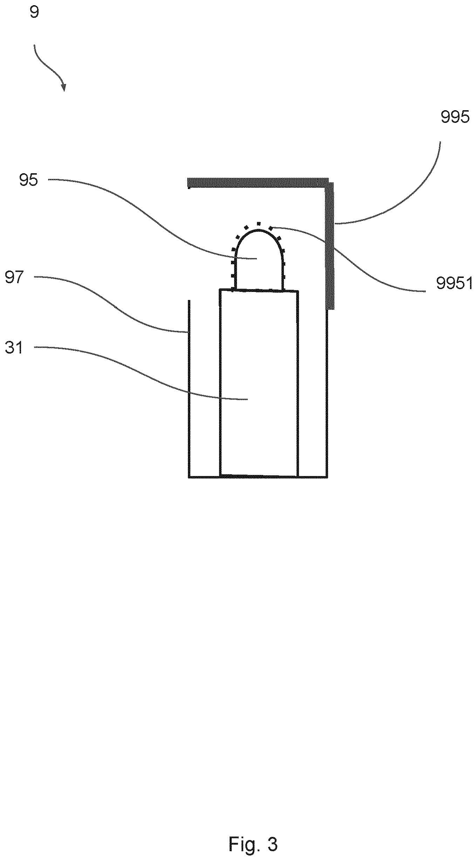

Fig. 3 shows a standalone sensor 9. In this embodiment, the sensitive portion 95 may be coated with a heat resistive coating material 9951. Additionally or alternatively, a portion of the casing 97 facing the second heat exchanger 7 is coated with a heat resistive coating material 995. The coating material 995 may either substitute the casing 97 and/or the heat shield 991 or it may be used as additional heat resistant means to any combination of the casing 97 with the heat shield 991.

## Claims

1. An air conditioning system (1) for a motor vehicle comprising: a housing (3) for a first fluid (AF), wherein the housing (3) comprises at least one port (3a) in its structure, a first heat exchanger (5) configured to heat exchange with the first fluid (AF), at least one second heat exchanger (7) configured to generate a heat radiation (HR), and at least one temperature sensor (9) configured to be fixed to the port (3a) so that at least a portion of the sensor (9) is located between the first heat exchanger (5) and the second heat exchanger (7), wherein the sensor (9) further comprises at least one sensitive portion (95) being thermally exposed to the first fluid (AF), wherein the sensor (9) further comprises a protrusion (31) integrally formed therewith configured to shift the sensitive portion (95) towards an intended measurement point of the housing (3), **characterized in that** the at least one sensitive portion (95) is at least partially isolated from the heat radiation (HR) generated by the second heat exchanger (7), and wherein the sensor (9) comprises
a casing (97) integrally formed with the protrusion (31) configured to at least partially insulate the protrusion (31) with the sensor (9) from the heat radiation (HR)

2. The air conditioning system (1) according to claim 1, wherein the sensor (9) comprises a heat shield (991) fixed to the casing (97) configured to limit at least a portion of the heat radiation (HR) from reaching the sensitive portion (95), wherein the heat shield (991) is in a form of protrusion distanced from the casing (97).

3. The air conditioning system (1) according to claim 1 or 2, wherein a portion of the casing (97) facing the second heat exchanger (7) is coated with a heat resistive coating material (995).

4. The air conditioning system (1) according to any of the preceding claims, wherein the sensor (9) comprises an opening (33) configured to provide a contact between the first fluid (AF) and the sensitive portion (95).

5. The air conditioning system (1) according to any of the preceding claims, wherein the sensitive portion (95) is thermally insulated from the heat radiation (HR).

6. The air conditioning system (1) according to any of the preceding claims, wherein a portion of the sensitive portion (95) is coated with a heat resistive coating material (9951).

7. A motor vehicle comprising at least one air conditioning system (1) according to any of the preceding claims.

## Patentansprüche

1. Klimatisierungssystem (1) für ein Kraftfahrzeug, das Folgendes umfasst: ein Gehäuse (3) für ein erstes Fluid (AF), wobei das Gehäuse (3) zumindest eine Öffnung (3a) in seiner Struktur umfasst, einen ersten Wärmetauscher (5), dazu ausgelegt, Wärme mit dem ersten Fluid (AF) auszutauschen, zumindest einen zweiten Wärmetauscher (7), dazu ausgelegt, eine Wärmestrahlung (HR) zu erzeugen, und zumindest einen Temperatursensor (9), dazu ausgelegt, an der Öffnung (3a) befestigt zu werden, sodass sich zumindest ein Teil des Sensors (9) zwischen dem ersten Wärmetauscher (5) und dem zweiten Wärmetauscher (7) befindet, wobei der Sensor (9) ferner zumindest einen empfindlichen Teil (95) umfasst, der thermisch gegenüber dem ersten Fluid (AF) exponiert ist, wobei der Sensor (9) ferner einen integral damit ausgebildeten Vorsprung (31) umfasst, der dazu ausgelegt ist, den empfindlichen Teil (95) hin zu einem beabsichtigten Messpunkt des Gehäuses (3) zu verschieben, **dadurch gekennzeichnet, dass** der zumindest eine empfindliche Teil (95) zumindest teilweise von der durch den zweiten Wärmetauscher (7) erzeugten Wärmestrahlung (HR) isoliert ist, und wobei der Sensor (9) ein integral mit dem Vorsprung (31) ausgebildetes Gehäuse (97) umfasst, das dazu ausgelegt ist, den Vorsprung (31) mit dem Sensor (9) zumindest teilweise von der Wärmestrahlung (HR) zu isolieren.

2. Klimatisierungssystem (1) nach Anspruch 1, wobei der Sensor (9) einen am Gehäuse (97) befestigten Wärmeschild (991) umfasst, der dazu ausgelegt ist, zumindest einen Teil der Wärmestrahlung (HR) am Erreichen des empfindlichen Teils (95) zu hindern, wobei der Wärmeschild (991) in einer Form eines Vorsprungs ist, der vom Gehäuse (97) beabstandet ist.

3. Klimatisierungssystem (1) nach Anspruch 1 oder 2, wobei ein Teil des Gehäuses (97), der zum zweiten Wärmetauscher (7) zeigt, mit einem wärmebeständigen Beschichtungsmaterial (995) beschichtet ist.

4. Klimatisierungssystem (1) nach einem der vorhergehenden Ansprüche, wobei der Sensor (9) eine Öffnung (33) umfasst, die dazu ausgelegt ist, einen Kontakt zwischen dem ersten Fluid (AF) und dem empfindlichen Teil (95) bereitzustellen.

5. Klimatisierungssystem (1) nach einem der vorhergehenden Ansprüche, wobei der empfindliche Teil (95) von der Wärmestrahlung (HR) thermisch isoliert ist.

6. Klimatisierungssystem (1) nach einem der vorhergehenden Ansprüche, wobei ein Teil des empfindlichen Teils (95) mit einem wärmebeständigen Beschichtungsmaterial (9951) beschichtet ist.

7. Kraftfahrzeug, umfassend zumindest ein Klimatisierungssystem (1) nach einem der vorhergehenden Ansprüche.

## Revendications

1. Système de climatisation (1) pour un véhicule à moteur comprenant : un logement (3) pour un premier fluide (AF), dans lequel le logement (3) comprend au moins un orifice (3a) dans sa structure, un premier échangeur de chaleur (5) configuré pour échanger de la chaleur avec le premier fluide (AF), au moins un second échangeur de chaleur (7) configuré pour générer un rayonnement de chaleur (HR), et au moins un capteur de température (9) configuré pour être fixé à l'orifice (3a) de telle sorte qu'au moins une partie du capteur (9) est située entre le premier échangeur de chaleur (5) et le second échangeur de chaleur (7), dans lequel le capteur (9) comprend en outre au moins une partie sensible (95) thermiquement exposée au premier fluide (AF), dans lequel le capteur (9) comprend en outre une saillie (31) formée de façon monobloc avec celui-ci configurée pour déplacer la partie sensible (95) vers un point de mesure prévu du logement (3), **caractérisé en ce que** l'au moins une partie sensible (95) est au moins partiellement isolée du rayonnement de chaleur (HR) généré par le second échangeur de chaleur (7), et dans lequel le capteur (9) comprend un boîtier (97) formé de façon monobloc avec la saillie (31) configuré pour isoler au moins partiellement la saillie (31), conjointement avec le capteur (9), du rayonnement de chaleur (HR).

2. Système de climatisation (1) selon la revendication 1, dans lequel le capteur (9) comprend un écran pare-chaleur (991) fixé au boîtier (97) configuré pour empêcher au moins une partie du rayonnement de chaleur (HR) d'atteindre la partie sensible (95), dans lequel l'écran pare-chaleur (991) est sous une forme de saillie espacée du boîtier (97).

3. Système de climatisation (1) selon la revendication 1 ou 2, dans lequel une partie du boîtier (97) faisant face au second échangeur de chaleur (7) est enduite avec un matériau de revêtement résistant à la chaleur (995).

4. Système de climatisation (1) selon de quelconques des revendications précédentes, dans lequel le capteur (9) comprend une ouverture (33) configurée pour fournir un contact entre le premier fluide (AF) et la partie sensible (95).

5. Système de climatisation (1) selon de quelconques des revendications précédentes, dans lequel la partie sensible (95) est thermiquement isolée du rayonnement de chaleur (HR).

6. Système de climatisation (1) selon de quelconques des revendications précédentes, dans lequel une partie de la partie sensible (95) est enduite avec un matériau de revêtement résistant à la chaleur (9951).

7. Véhicule à moteur, comprenant au moins un système de climatisation (1) selon de quelconques des revendications précédentes.
